# EUROPEAN PATENT APPLICATION

(11) **EP 4 016 442 A1**
(43) Date of publication of application: **22.06.2022**
(21) Application number: 20214133.9
(22) Date of filing: 15.12.2020
(51) Int. Cl.: G06T 1/00, G06T 3/40

(54) **METHOD FOR DETECTING DEFECTS IN A 3D PRINTER**

(71) Applicant: Siemens Energy Global GmbH & Co. KG, 81739 München (DE)
(72) Inventor: Jahangir, Hamid, 52074 Aachen (DE)

(57) **Abstract**

The computer-implemented method for detecting defects in a 3D printer, wherein the method comprises the steps:
a) capturing a first image of a construction space of the 3D printer, wherein the construction space comprises a 3D printed part that is shown in the first image;
b) generating a second image that has a higher spatial resolution than the first image out of the first image by using a spatial resolution increasing artificial neural network.

## Description

The invention relates to a computer-implemented method for detecting defects in a 3D printer, a data processing unit, a 3D printer, a computer program and a computer-readable data carrier.

In a 3D printer a part is manufactured by selectively melting or sintering a powder bed layerwise. The powder of the powder bed can be a metallic powder and the powder can be melted or sintered by means of a laser or an electron beam. During the manufacturing of the part, defects can occur in the part. The defects can for example occur when a recoater incompletely deposits a layer of the powder bed. During the manufacturing of the part hot spots can be formed that can result in an oxidation of the part and/or in the formation of a rough surface of the part. The hot spots can also lead to a deformation of the part which can then lead to lifting and/or a lowering of adjacent parts of the powder bed. On the other hand, cold spots can be formed during the manufacturing of the part, wherein the hot spots can lead to an incomplete melting of the powder which can lead to a porosity of the part.

The 3D printer can comprise a camera that is adapted to monitor the manufacturing of the part. The camera might be able to detect some of the defects mentioned above, but might not be able detect other defects mentioned above. For example, the camera might be able to detect defects in the powder bed but might not be able to detect defects in the part.

It is therefore an object of the invention to provide a method for detecting defects in a 3D printer, wherein the method allows an improved detection of defects.

A first inventive computer-implemented method for detecting defects in a 3D printer comprises the steps: a) capturing a first image of a construction space of the 3D printer, wherein the construction space comprises a 3D printed part that is shown in the first image; b) generating a second image that has a higher spatial resolution than the first image out of the first image by using a spatial resolution increasing artificial neural network.

A second inventive computer-implemented method for detecting defects in a 3D printer comprises the steps: a) capturing a sequence of images of a construction space of the 3D printer, wherein the construction space comprises a 3D printed part that is shown in the images of the sequence; a1) combining the images of the sequence into a first image; b) generating a second image that has a higher spatial resolution than the first image out of the first image by using a spatial resolution increasing artificial neural network.

By increasing the spatial resolution, it is possible to detect defects in the part in the second image that might not be visible in the first image. Therefore, an improved detection of defects is provided.

The spatial resolution increasing artificial neural network comprises an input layer in which the first image is arranged and an output layer that results the second image. The artificial neural network can be trained by providing a first set of images with a low spatial resolution and a second set of corresponding images with a high spatial resolution. The first set and the second set can for example be generated by capturing images of a plurality of objects, wherein each object is captured with a low spatial resolution and a high spatial resolution. It is also possible to calculate a low resolution image out of each image of the second set to result in the first set. It is also possible to take publicly available datasets for the first set and the second set. The spatial resolution increasing artificial neural network is then trained by adapting the weights of the spatial resolution increasing artificial neural network such that when the images of the first set are respectively taken as the input layer, each output layer approximates the corresponding image of the second set.

In the second method, the sequence is preferably carried out during the manufacturing of the part. The images of the sequence can for example be captured with a repetition rate of at least 1 kHz. For this purpose, the 3D printer can comprise a camera that is, for example, a CMOS camera or a sCMOS camera. The first image thereby contains an information about the progress of the manufacturing of the part. In step a1) of the second method, the images of the sequence can for example be combined by adding, for each of the pixels, the intensity values of the same pixel of each of the images of the sequence.

It is preferred that the method comprises the step: a2) increasing the contrast of the first image by using a contrast increasing artificial neural network, wherein in step b) the first image with the increased contrast is used. By increasing the contrast, it is possible to detect defects in the part and/or in the powder bed in the second image that might not be visible in the first image. Therefore, an improved detection of defects is provided. By increasing the contrast before increasing the spatial resolution, fewer pixels have to be processed by the contrast increasing artificial neural network as in the case that the contrast would be increased after the spatial resolution is increased. Therefore, processing time is shorter.

Step a2) can also include an adjustment of the brightness of the first image. Some first images might not be illuminated sufficiently so that the contrast increasing artificial neural network increases the brightness. Other first images might be over-illuminated so that the contrast increasing artificial neural network decreases the brightness.

The method preferably comprises the step: c) increasing the contrast of the second image by using a contrast increasing artificial neural network. It is also conceivable that in step c) first a contrast is determined in the first image and that the contrast of the second image is increased by using the contrast increasing artificial neural network only in the case that the determined contrast is below a threshold. In this way, processing time can be shortened.

It is preferred that the contrast increasing artificial neural network has an input layer and an output layer and is trained by providing a first set of images with a low contrast and a second set of corresponding images with a high contrast and by adapting the weights of the contrast increasing artificial neural network such that when the images of the first set are respectively taken as the input layer, each histogram of the output layer approximates the histogram of the corresponding image of the second set. By training the histograms and not the images itself, fewer processing time is needed for training the contrast increasing artificial neural network. A histogram counts how many pixels in the image measure an intensity that is arranged in a certain intensity range. The histogram can for example comprise a plot having a horizontal axis, over which the intensity divided into several of the intensity ranges is plotted, and a vertical axis over which the number of pixels for each of the intensity ranges is plotted. The first set of images and the second set of images might also differ in the brightness. For example, images of the first set might not be sufficiently illuminated or might be over-illuminated.

It is alternatively preferred that the contrast increasing artificial neural network has an input layer and an output layer and is trained by providing a first set of images with raw images and a second set of corresponding images that are the raw images that have been gamma-corrected and by adapting the weights of the contrast increasing artificial neural network such that when the images of the first set are respectively taken as the input layer, each image of the output layer approximates the gamma-corrected images of the corresponding image of the second set.

The method preferably comprises the step: d1) detecting in the first image possibly occurring defects in a powder bed that surrounds the part. Usually, defects in the powder bed can be detected in images that have a relatively low resolution. By detecting the defects in the first images and not in the second images, fewer pixels have to be processed which results in a short processing time.

Preferably, the method comprises the step: d2) detecting in the second image possibly occurring defects in the part and optionally in the powder bed that surrounds the part.

It is preferred that in step d1) and/or step d2) the defects are detected by an image processing method and in particular by a machine learning method.

The image processing method and the machine learning method can comprise following steps: (i) providing an image data set and applying a Principal Component Analysis to said image data to compute a number of image clusters; (ii) applying a clustering algorithm to the analysed image data and computing respective cluster centroids; (iii) comparing the computed cluster centroids with a set of reference anomaly centroids, wherein - based on a match of cluster centroids with the reference - the image data is segmented layerwise into cluster images of a specific anomaly; (iv) transforming the segmented images into a defined color space, such as a Lab color space or grey-scale spectrum; and (v) integrating a pixel information of the transformed segmented cluster images to compute a threshold value for the image data set in order to determine a respective anomaly.

The method preferably comprises the step: e) classifying the defects. This includes for example distinguishing between powder bed defects, hot spots, cold spots, the part being at least partly porous, the part having at least one void and/or the part having at least one non-fused region.

It is preferred that step a) and step b) and optional step a1), step a) step c), step d1), step d2 and/or step e) are performed during manufacturing of the part. It is alternatively preferred that step a) and step b) and optional step a1), step a) step c), step d1), step d2 and/or step e) are performed after manufacturing of the part.

The data processing apparatus according to the invention comprises a processor adapted to perform the steps of the method.

The 3D printer according to the invention comprises the data processing apparatus, the construction space and a camera adapted to capture the first image and/or the sequence of images. For the first inventive method the camera can for example be adapted to capture images with a repetition rate of 1 Hz to 60 Hz. For this purpose, the 3D printer can comprise a camera that is, for example, a CCD camera. The 3D printer is preferably adapted to perform the method steps of the first inventive method or a preferred embodiment thereof for each of the images captured by the camera. For the second inventive method the camera can for example be adapted to capture images with a repetition rate of at least 1 kHz.

The computer program according to the invention comprises instructions which, when the program is executed by a computer, cause the computer to carry out the steps of the method.

The computer-readable data carrier according to the invention has the computer program stored thereon.

In the following the invention is explained on the basis of flow diagrams.
Figure 1 shows a first exemplary flow diagram.
Figure 2 shows a second exemplary flow diagram.
Figure 3 shows a third exemplary flow diagram.

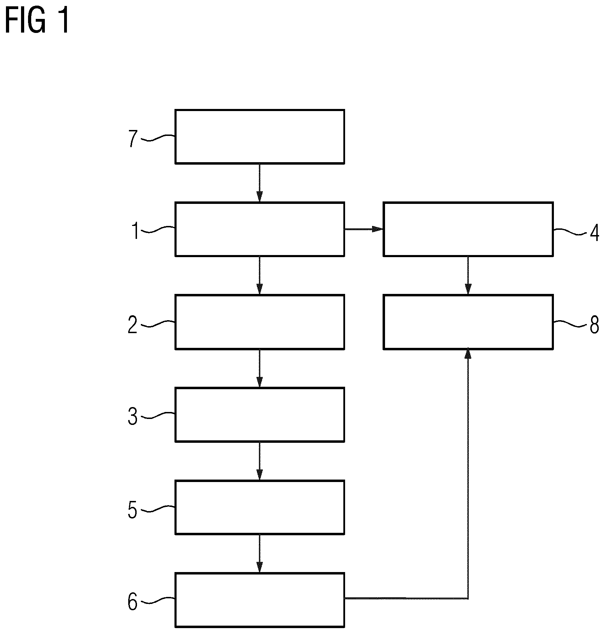

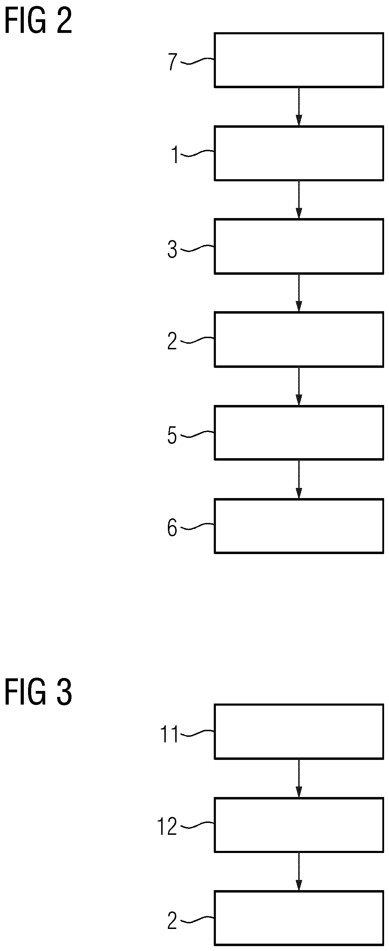

The computer-implemented method for detecting defects in a 3D printer according to Figures 1 and 2 comprises the steps: a) capturing a first image 1 of a construction space of the 3D printer, wherein the construction space comprises a 3D printed part that is shown in the first image; b) generating a second image 2 that has a higher spatial resolution than the first image out of the first image by using a spatial resolution increasing artificial neural network. The 3D printer can comprise a camera that

The computer-implemented method for detecting defects in a 3D printer according to Figure 3 comprises the steps: a) capturing a sequence of images 11 of a construction space of the 3D printer, wherein the construction space comprises a 3D printed part that is shown in the images of the sequence; a1) combining the images 12 of the sequence into a first image; b) generating a second image 2 that has a higher spatial resolution than the first image out of the first image by using a spatial resolution increasing artificial neural network.

The 3D printer can comprise a camera. For the methods according to the Figures 1 and 2, the camera can be adapted to capture the first images with a repetition rate of 1 Hz to 60 Hz and step b) can be carried out for each of the first images captured in step a). The camera according to Figures 1 and 2 can for example be a CCD camera. For the method according to the Figure 3, the camera can be adapted to capture the first images with a repetition rate of at least 1 kHz to 60 Hz and step b) can be carried out for each of the first images generated in step a1). The camera according to Figures 3 can for example be a CMOS camera or a sCMOS camera.

Before step a), the methods can have a pre-calibration step 7 for the camera, as it exemplary indicated in Figures 1 and 2. In the pre-calibration step 7, each pixel of both the first image and the second image is assigned to a respective location in the 3D printer.

Figure 1 shows that the method can comprise the step: c) increasing the contrast 3 of the second image by using a contrast increasing artificial neural network. The contrast increasing artificial neural network can have an input layer and an output layer and is trained by providing a first set of images with a low contrast and a second set of corresponding images with a high contrast and by adapting the weights of the contrast increasing artificial neural network such that when the images of the first set are respectively taken as the input layer, each histogram of the output layer approximates the histogram of the corresponding image of the second set.

As it can be seen in Figure 1, the methods can comprise the step: d2) detecting in the second image possibly occurring defects in the part and/or in the powder bed that surrounds the part 5. Step d2) can for example be carried but a visual inspection carried out by an operator of the 3D printer. Alternatively, it is possible that in step d2) the defects are detected by an image processing method and in particular by a machine learning method.

Figure 1 furthermore shows that the methods can comprise the step: e) classifying the defects 6. This includes for example distinguishing between powder bed defects, hot spots, cold spots, the part being at least partly porous, the part having at least one void and/or the part having at least one non-fused region.

As it can be seen in Figure 1, the methods can comprise the step: d1) detecting in the first image possibly occurring defects in a powder bed that surrounds the part 4. The information resulting from steps d1), d2) and/or e) can then be used in a step f) in which the defects are localized, in particular by using the assignments performed in the pre-calibration step, and visualized 8.

Figure 2 shows that the method can comprise the step: a2) increasing the contrast 3 of the first image by using a contrast increasing artificial neural network, wherein in step b) the first image with the increased contrast is used. Furthermore, the method can comprise the step: d2) detecting in the second image possibly occurring defects in the part and/or in the powder bed that surrounds the part 5. Step d2) can for example be carried but a visual inspection carried out by an operator of the 3D printer. Alternatively, it is possible that in step d2) the defects are detected by an image processing method and in particular by a machine learning method.

Step a) and step b) and optional step c), step d) and/or step e) can be performed during manufacturing of the part. Alternatively, step a) and step b) and optional step c), step d) and/or step e) can be performed after manufacturing of the part.

## Claims

1. Computer-implemented method for detecting defects in a 3D printer, wherein the method comprises the steps:
a) capturing a first image (1) of a construction space of the 3D printer, wherein the construction space comprises a 3D printed part that is shown in the first image;
b) generating a second image (2) that has a higher spatial resolution than the first image out of the first image by using a spatial resolution increasing artificial neural network.

2. Computer-implemented method for detecting defects in a 3D printer, wherein the method comprises the steps:
a) capturing a sequence of images (11) of a construction space of the 3D printer, wherein the construction space comprises a 3D printed part that is shown in the images of the sequence;
a1) combining the images of the sequence into a first image (12) ;
b) generating a second image (2) that has a higher spatial resolution than the first image out of the first image by using a spatial resolution increasing artificial neural network.

3. Method according to claim 1 or 2, wherein the method comprises the step:
a2) increasing the contrast (3) of the first image by using a contrast increasing artificial neural network, wherein in step b) the first image with the increased contrast is used.

4. Method according to claim 1 or 2, wherein the method comprises the step:
c) increasing the contrast (3) of the second image by using a contrast increasing artificial neural network.

5. Method according to any one of claims 1 to 4, wherein the contrast increasing artificial neural network has an input layer and an output layer and is trained by providing a first set of images with a low contrast and a second set of corresponding images with a high contrast and by adapting the weights of the contrast increasing artificial neural network such that when the images of the first set are respectively taken as the input layer, each histogram of the output layer approximates the histogram of the corresponding image of the second set.

6. Method according to any one of claims 1 to 5, wherein the method comprises the step:
d1) detecting in the first image possibly occurring defects in a powder bed that surrounds the part (4).

7. Method according to any one of claims 1 to 6, wherein the method comprises the step:
d2) detecting in the second image possibly occurring defects in the part and/or in the powder bed that surrounds the part (5) .

8. Method according to claim 6 or 7, wherein in step d1) and/or step d2) the defects are detected by an image processing method and in particular by a machine learning method.

9. Method according to any one of claims 6 to 8, wherein the method comprises the step:
e) classifying the defects (6).

10. Method according to any one of claims 1 to 9, wherein step a) and step b) and optional step a1), step a2), step c), step d1), step d2) and/or step e) are performed during manufacturing of the part.

11. Method according to any one of claims 1 to 10, wherein step a) and step b) and optional step a1), step a2), step c), step d1), step d2) are performed after manufacturing of the part.

12. Data processing apparatus comprising a processor adapted to perform the steps of the method according to any one of claims 1 to 11.

13. 3D printer comprising the data processing apparatus according to claim 12, the construction space and a camera adapted to capture the first image and/or the sequence of images.

14. Computer program comprising instructions which, when the program is executed by a computer, cause the computer to carry out the steps of the method according to any one of claims 1 to 11.

15. Computer-readable data carrier having stored thereon the computer program according to claim 14.
